# NEUE EUROPÄISCHE PATENTSCHRIFT

(11) **EP 2 057 882 B2**
(45) Veröffentlichungstag und Bekanntmachung des Hinweises auf die Entscheidung über den Einspruch: **29.10.2014**
(45) Hinweis auf die Patenterteilung: 23.11.2011
(21) Anmeldenummer: 08162194.8
(22) Anmeldetag: 12.08.2008
(51) Int. Cl.: A01D 41/127

(54) **Verfahren zur Qualitätsüberwachung von Erntegut**
Method for monitoring the quality of harvesting material
Procédé de contrôle de la qualité de récoltes

(30) Priorität: 10.11.2007 DE 102007053662
(43) Veröffentlichungstag der Anmeldung: 13.05.2009
(73) Patentinhaber: CLAAS Selbstfahrende Erntemaschinen GmbH, 33428 Harsewinkel (DE)
(72) Erfinder: Behnke, Willi, 33803 Steinhagen (DE)

(56) Entgegenhaltungen:
- EP-A- 1 763 988
- WO-A-2006/010761
- WO-A1-2006/010761
- US-A- 4 975 863
- US-A- 6 119 442
- US-A1- 2003 059 090
- US-A1- 2008 186 487
- R. RUAN ET AL.: 'Estimation of weight percentage of scabby wheat kernels using an automatic machine vision and neural network based system' TRANSACTION OF THE ASAE Bd. 44, Nr. 4, 2001, Seiten 983 - 988

## Beschreibung

Die vorliegende Erfindung betrifft ein Verfahren zur Einschätzung des Anteils an unerwünschten Partikeln in Erntegut. Die Qualität, insbesondere die Reinheit eines Ernteguts wie etwa Getreide ist entscheidend für die Möglichkeiten der Weiterverarbeitung und daher auch ausschlaggebend für den Preis, den ein Landwirt für das Erntegut erlösen kann. Im Allgemeinen definiert der Abnehmer des Ernteguts Grenzwerte für den Anteil an unerwünschten Partikeln im Erntegut, deren Überschreitung zu einer Herabsetzung des Abnahmepreises führt.

Die Art und weise der Einbringung des Ernteguts beeinflusst wesentlich die Menge an darin enthaltenen unerwünschten Bestandteilen. So wird in einem Mähdrescher bei zu scharfer Einstellung des Dreschwerks ein hoher Anteil an Kornbruch erhalten, der unerwünscht ist, weil er die Haltbarkeit des Korns beeinträchtigt. Bei einer zu sanften Einstellung gelangen unvollständig gedroschene Körner ins Erntegut, die dessen Weiterverarbeitung stören. Spelzen und Kurzstroh, das beim Dreschen in den Erntegutstrom gelangt ist, kann zwar in einem der Dreschstufe nachgeschalteten Windsichter wieder abgeschieden werden, doch führt eine zu scharfe Einstellung des Windsichters auch zu Kornverlusten. Es ist daher für den Landwirt von großer Bedeutung, einerseits die ihm gesetzten Vorgaben hinsichtlich der Qualität des Ernteguts sicher einhalten zu können, andererseits aber Erntegutverluste, die zur Einhaltung der vorgegebenen Qualität nicht erforderlich sind, zu vermeiden.

Hierfür ist es wünschenswert, die Qualität des Ernteguts noch während des Erntevorgangs beurteilen zu können, um gegebenenfalls Maßnahmen zur Sicherung der erforderlichen Qualität treffen oder unnötige Verluste vermeiden zu können.

Aus EP 1 763 988 A1 ist ein Verfahren zur Einstellung eines Arbeitsaggregats einer Erntemaschine bekannt, bei dem Bilder eines Erntegutstroms erzeugt werden. Ein Bediener der Erntemaschine kann anhand dieser Bilder, insbesondere im Vergleich mit hinterlegten Referenzbildern, den Verschmutzungsgrad des Ernteguts beurteilen und gegebenenfalls Änderungen von Betriebsparametern an der Erntemaschine vornehmen, die die Qualität des Ernteguts verbessern oder Verluste an Erntegut reduzieren.

Die herkömmliche Beurteilung der Erntegutqualität durch den Benutzer der Maschine ist jedoch nicht völlig objektiv, und die Wirksamkeit des Verfahrens hängt stark von dem Maß an Aufmerksamkeit ab, das der Benutzer der Erntegutqualität widmen kann. Dieses Maß an Aufmerksamkeit ist im Allgemeinen nicht sehr hoch, da der Benutzer gleichzeitig mit dem Steuern der Erntemaschine beschäftigt ist.

DE 197 20 121 C2 offenbart ein Verfahren zur quantitativen Bestimmung unerwünschter Anteile wie etwa Blätter und Erde in Zuckerrüben oder verfaulter Früchte in Weintrauben, bei dem farbige Bilder des Ernteguts aufgenommen werden, Farbhistogramme der aufgenommenen Bilder erzeugt werden und aus dem Anteil von den unerwünschten Bestandteilen zugeordneten Farbwerten an den Histogrammen auf den Anteil der unerwünschten Bestandteile im Erntegut geschlossen wird. Um sichere Ergebnisse zu liefern, erfordert ein solches Verfahren deutliche farbliche Unterschiede zwischen erwünschten und unerwünschten Anteilen des Ernteguts. Da das Verfahren nicht in der Lage ist, zwischen der Abbildung eines freiliegenden, gut beleuchteten aber dunklen Objekts und der eines an sich hellen, aber durch andere Objekte verschatteten Objekts zu unterscheiden, ist eine Messung nach diesem Verfahren unvermeidlicherweise mit einem nicht vernachlässigbaren Untergrundsignal behaftet. Bei Anwendung des Verfahrens durch den Abnehmer des Ernteguts ist dies hinnehmbar, da dieser für die Beurteilung des zu entrichtenden Preises lediglich verifizieren muss, dass die vorgegebenen Grenzwerte für die Reinheit des Ernteguts eingehalten sind, er aber nicht herauszufinden braucht, um wie weit sie eventuell unterschritten sind.

Eben dies macht das aus DE 197 20 121 C2 bekannte Verfahren im Wesentlichen unbrauchbar für den Produzenten des Ernteguts.

Die US 2003/0059090 A1 beschreibt ein optisches Verfahren zur Klassifizierung der Reinheit eines Baumwollballens hinsichtlich des in diesem enthaltenen Anteils an Fremdmaterial auf der Basis einer Bildverarbeitung. Zu der Identifizierung und Quantifizierung von Fremdmaterial in dem Baumwollballen wird ein Abbild einer statischen Probe durch den Einsatz einer Bildverarbeitungssoftware sowie der Anwendung mathematischer Modelle analysiert.

Aus der nachveröffentlichten EP 1 956 361 A2 ist eine Messeinrichtung zur optischen Untersuchung eines Erntegutes bekannt, welche unter Verwendung einer Bildbearbeitungssoftware in dem Erntegut enthaltene Partikel identifiziert.

Aufgabe der Erfindung ist, die Nachteile des Standes der Technik zu beseitigen und insbesondere ein untergrundärmeres Verfahren zur Beurteilung der Erntegutqualität bereitzustellen, die dem Produzenten ermöglicht, eine gewünschte Erntegutqualität sicherzustellen, ohne durch übertrieben scharfe Einstellungen seiner Erntemaschine unnötige Verluste an Erntegut zu erleiden.

Dieses Ziel wird erfindungsgemäß mit den Merkmalen alls Anspruchs 1 gelöst.

Während bei einer herkömmlichen Histogrammbildung für jeden einzelnen Bildpunkt ohne Berücksichtigung seiner Nachbarpunkte entschieden wird, ob sein Farbwert dem eines unerwünschten Partikels entspricht, und somit Farbabweichungen, die sich aus unterschiedlichen Belichtungsverhältnissen und Verschattung ergeben, nicht berücksichtigt werden können, beinhaltet die Identifikation von Abbildern unerwünschter Partikel eine Auswertung der Bildpixel nicht jeweils für sich allein, sondern unter Berücksichtigung des Informationsgehaltes von Nachbarpixeln. So können insbesondere örtlich ausgedehnte Muster, die für Abbilder bestimmter Klassen von unerwünschten Partikeln typisch sind, erkannt und berücksichtigt werden. Die Flächenmessung des so erfassten Abbilds eines Partikels gibt Aufschluss über dessen Größe und indirekt auch über seine Masse. Daher kann anhand des Anteils der Abbilder von unerwünschten Partikeln an der Fläche des Bildes auch der Anteil dieser Partikel am Erntegut quantifiziert werden.

Letzteres geschieht zweckmäßigerweise, indem die erfasste Fläche mit einem Korrekturfaktor multipliziert wird. Dieser typischerweise empirisch festgelegte Korrekturfaktor berücksichtigt diverse Charakteristika der unerwünschten Partikel, so zum Beispiel die Neigung von spezifisch leichten und großen Partikeln, sich an der Oberfläche eines bewegten Erntegutstroms anzureichern, die Tatsache, dass zerbrochene Körner, die eine wichtige Klasse von unerwünschten Partikeln bei körnigem Erntegut wie etwa Getreide darstellen, nur bei geeigneter Orientierung als solche erkennbar sind, etc.

Zweckmäßigerweise werden in einem weiteren Verfahrensschritt e) die in Schritt c) erfassten Abbilder der unerwünschten Partikel in dem Bild gekennzeichnet und das so erhaltene Bild wird angezeigt. Dies ermöglicht einem Benutzer, die Qualität der Messung, das heißt die Vollständigkeit der Erfassung der unerwünschten Partikel, jederzeit zu überprüfen. Im einfachsten Fall kann der Benutzer die so erhaltene Information nutzen, indem er einen höheren als den erfassten Anteil an unerwünschten Partikeln annimmt, wenn er erkennt, dass nicht alle unerwünschten Partikel in Schritt b) identifiziert werden, oder indem er einen niedrigeren Anteil an unerwünschten Partikeln annimmt, wenn in Schritt b) erwünschte Partikel fälschlicherweise als unerwünscht identifiziert werden. Wenn die Identifikation des Schritts b) anhand wenigstens eines anpassbaren Parameters erfolgt, umfasst das Verfahren vorzugsweise zusätzlich den Schritt des Akzeptierens eines durch einen Benutzer gewählten Werts des Parameters. Dies ermöglicht es dem Benutzer, die Erkennung der unerwünschten Partikel zu beeinflussen und die Erkennungsgenauigkeit zu optimieren.

Wenn der Benutzer einen solchen anpassbaren Parameter geändert hat, werden die Schritte c) und e) zweckmäßigerweise am gleichen aufgenommenen Bild wiederholt, so dass der Benutzer die Auswirkungen der von ihm vorgenommenen Änderung unmittelbar beurteilen kann. Der Benutzer muss daher die Bedeutung der anpassbaren Parameter für die Erkennung der unerwünschten Partikel nicht verstehen; er kann eine Optimierung der Erkennung rein durch Versuch und Irrtum vornehmen.

Wenn der in Schritt d) festgelegte Anteil der Abbilder der unerwünschten Bestandteile einen Grenzwert überschreitet, wird zweckmäßigerweise ein Warnsignal erzeugt, um den Benutzer zu veranlassen, Parameter der Verarbeitung des Ernteguts nachzuregeln und so dessen Qualität zu verbessern.

Einer weiterentwickelten Ausgestaltung des Verfahrens zufolge kann die Anpassung dieser Parameter auch automatisiert erfolgen.

Um statistische Schwankungen auszumitteln, wird Schritt e) zweckmäßigerweise jeweils für mehrere aufgenommene Bilder gemeinsam durchgeführt. Eine solche gemeinsame Verarbeitung kann zum Beispiel darin beruhen, dass mehrere aufgenommene Bilder zu einem Bild mit der mehrfachen Fläche zusammengefügt werden und die Verfahrensschritte ab dem Schritt b) an dem zusammengefügten Bild vorgenommen werden. Alternativ können auch die Schritte b) bis d) für jedes Bild getrennt vorgenommen und die dabei festgelegten Anteile gemittelt werden.

Das vorgeschlagene Verfahren eignet sich erfindungsgemäß zur Überwachung eines Erntegutstroms in einer Erntemaschine wie etwa einem Mähdrescher.

Eine Klasse von unerwünschten Partikeln können, wie bereits erwähnt, Bruchkörner sein. Das Abbild eines solchen Bruchkorns ist identifizierbar als helle Zone im Bild, die dem angebrochenen Mehlkörper entspricht, während die umgebende Schale des Korns im Allgemeinen dunkler ist. Um das Bruchkorn von Partikeln anderer Art und/oder Beleuchtungsartefakten unterscheiden zu können, wird die helle Zone zweckmäßigerweise dann als Bruchkorn identifiziert, wenn ihre Ausdehnung in einem vorgegebenen Bereich liegt.

Allgemein kann man sagen, dass gemäß einer bevorzugten Ausgestaltung und insbesondere wenn es darum geht, unerwünschte Partikel zu identifizieren, die sich durch ihre Helligkeit (in einem oder mehreren Spektralbereichen) vom gewünschten Erntegut unterscheiden, das Bild vorzugsweise regionenorientiert segmentiert wird und anhand der Helligkeit jeder einzelnen erhaltenen Region entschieden wird, ob sie das Abbild eines unerwünschten Partikels ist oder nicht.

Wenn eine Klasse der unerwünschten Partikel Kurzstroh ist, kann dieses in Schritt b) immer dann identifiziert werden, wenn die Ausdehnung einer Zone in dem Bild in einer Längsrichtung in einem ersten Wertebereich und in einer Querrichtung in einem anderen, zweiten Wertebereich liegt.

Allgemein kann zur Identifizierung von unerwünschten Partikeln, die sich mehr durch ihre Gestalt als durch ihre Helligkeit beziehungsweise Farbe vom gewünschten Erntegut unterscheiden, das Bild zweckmäßigerweise kantenorientiert segmentiert werden und anhand der Länge jeder erhaltenen Kante entschieden werden, ob sie einen unerwünschten Partikel darstellt oder nicht.

Gegenstand der Erfindung ist auch ein Computerprogramm mit Programmcodemitteln zum Durchführen der Schritte eines Verfahrens wie oben beschrieben auf einem mit einer Kamera gekoppelten Computer beziehungsweise ein Computerprogrammprodukt mit Programmcodemitteln, die auf einem computerlesbaren Datenträger gespeichert sind, um das oben beschriebene Verfahren auf einem mit einer Kamera gekoppelten Computer auszuführen.

Ein weiterer Erfindungsgegenstand ist der an eine Kamera gekoppelte und zur Ausführung des Verfahrens eingerichtete Computer selber, insbesondere wenn er in einer Erntemaschine eingebaut ist und die Kamera angeordnet ist, um Bilder eines Erntegutstroms in der Erntemaschine zu erzeugen.

Ein solcher Computer kann ferner eingerichtet sein, Parameter der Verarbeitung des Ernteguts in der Erntemaschine anhand des festgelegten Anteils der unerwünschten Partikel zu steuern.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine landwirtschaftliche Erntemaschine in Form einer schematisierten Seitenansicht eines Mähdreschers;
- Fig. 2: ein Flussdiagramm eines von einem Bord- computer des Mähdreschers ausgeführten Programms zur Überwachung der Qualität des Ernteguts; und
- Fig. 3: ein Beispiel eines von dem Computer auf einem Bildschirm der Fahrerkanzel des Mähdreschers zur Anzeige gebrachten Bilds.

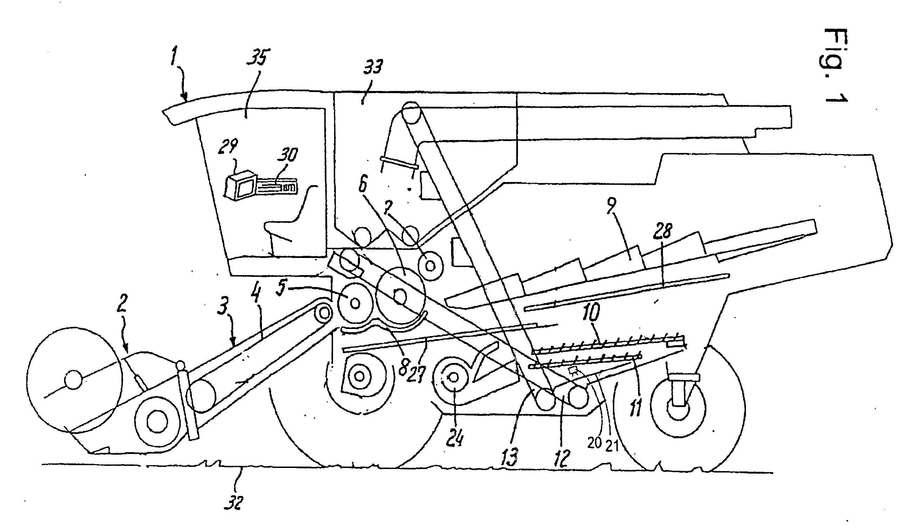

Fig. 1 zeigt eine schematische Seitenansicht eines Mähdreschers 1. Ein Getreideschneidwerk 2 dient zum Schneiden und Aufnehmen von Getreidehalmen von einer Ackerfläche 32 und Zuführen derselben zu einem Einzug 3. In dem Einzug 3 befinden sich umlaufende Einzugsketten 4 mit Querstreben, die das Erntegut den nachgeordneten Dreschaggregaten 5, 6 zuführen. Das Erntegut wird von einer Vorbeschleunigertrommel 5 am Ende des Einzugs 3 abgenommen und entlang des Umfangs der Vorbeschleunigertrommel 5 zwischen dieser und einem Dreschkorb 8 beschleunigt. Das beschleunigte Erntegut wird an die Dreschtrommel 6 übergeben und weiter beschleunigt. Durch die schlagende und reibende Wirkung der Vorbeschleunigertrommel 5 und der Dreschtrommel 6 und die auf das Erntegut wirkende Zentrifugalkraft wird das Erntegut aus den Ähren und vom Stroh getrennt und gelangt durch den für das Erntegut durchlässigen Dreschkorb 8 auf den Vorbereitungsboden 27. Das von der Dreschtrommel 6 abgegebene Stroh wird durch eine Wendetrommel 7 auf mehrere über die Arbeitsbreite nebeneinander angeordnete Schüttler 9 umgelenkt. Die Schwingbewegung der Schüttler 9 sowie deren stufenförmige Ausbildung bewirken eine Förderung des Strohs zum hinteren Ende des Mähdreschers hin sowie eine Abscheidung des noch im Stroh befindlichen Erntegutes. Diese Restmenge wird über einen schwingend bewegten Rücklaufboden 28 ebenfalls auf den Vorbereitungsboden 27 übergeben. Das auf dem Vorbereitungsboden 27 befindliche Erntegut mit den weiteren Beimengungen wie Strohstücke, Spreu und Ährenteile wird durch eine Schwingbewegung des Vorbereitungsbodens 27 und dessen stufenförmige Ausbildung separiert und nachfolgenden Reinigungsaggregaten, einem Obersieb 10 und einem Untersieb 11, zugeführt. Die Übergabe erfolgt über eine von einem Reinigungsgebläse 24 belüftete Fallstufe 34 auf das Obersieb 10. Dieses sowie das darunter befindliche Untersieb 11 sind in der Regel Lamellensiebe mit jeweils separat einstellbaren Öffnungsweiten. Das Unter- sowie das Obersieb 10, 11 werden von einem von dem Reinigungsgebläse 24 erzeugten Luftstrom durchsetzt. Die Schwingbewegung der Siebe 10, 11 sowie der Luftstrom bewirken eine Förderung des Ernteguts sowie von dessen Beimengungen zum hinteren Ende der Erntemaschine hin. Durch die Fallstufe 34 werden große und leichte Beimengungen von dem Luftstrom, bevor sie das Obersieb 10 erreichen, erfasst und aus dem Mähdrescher 1 abgeschieden. Kleinere und schwerere Erntegutbestandteile gelangen von dem Vorbereitungsboden 27 über die Fallstufe 34 auf das Obersieb 10. Je nach Einstellung der Obersiebweite fallen die einzelnen Erntegutkörner und weitere Bestandteile des Erntegutes durch dieses hindurch und gelangen so auf das Untersieb 11. Stroh und nicht ausgedroschene Ähren werden über den vorderen Siebbereich wegbewegt und fallen im hinteren Bereich des Obersiebes 10 durch das Obersieb 10 direkt in die sogenannte Überkehr. Das Untersieb 11 besitzt in der Regel eine feinere Sieblamellenstruktur als das Obersieb 10 und wird normalerweise mit einer geringeren Öffnungsweite als das Obersieb 10 eingestellt. Größere und leichtere Erntegutbestandteile, wie Erntegutkörner mit Spelz, Ährenteile oder Halmteile werden, sofern sie durch das Obersieb 10 auf das Untersieb 11 gelangt sind, durch die Schwingbewegung und den Luftstrom in die Überkehr übergeben. Das gereinigte Erntegut selbst fällt direkt durch das Untersieb 11 hindurch und wird mittels einer Zufuhrschnecke und dem Kornelevator 13 in den Korntank 33 gefördert.

Eine Kamera 20 und eine Lichtquelle zum Ausleuchten des Blickfeldes der Kamera 20 sind an geeigneter Stelle stromabwärts vom Untersieb 11 auf dem Weg des Korns platziert. Sie können zum Beispiel unter dem Untersieb 11 platziert und auf einen sich unter dem Untersieb 11 erstreckenden, zum Kornelevator 13 hin abschüssigen Schüttboden 21 ausgerichtet sein, um Bilder des darüber strömenden Ernteguts zu liefern; eine Platzierung am Kornelevator 13 selbst kommt ebenfalls in Betracht.

In die Überkehr gelangtes Erntegut wird mittels einer Zufuhrschnecke und einem Überkehrelevator 12 oberhalb der Vorbeschleunigertrommel 5 erneut dem Dreschprozess zugeführt.

Der Mähdrescher 1 ist mit einer Fahrerkabine 35 ausgestattet, in welcher eine Steuer- und Monitoreinrichtung 29 angeordnet ist, die als eine Benutzerschnittstelle eines Bordcomputers 30 fungiert.

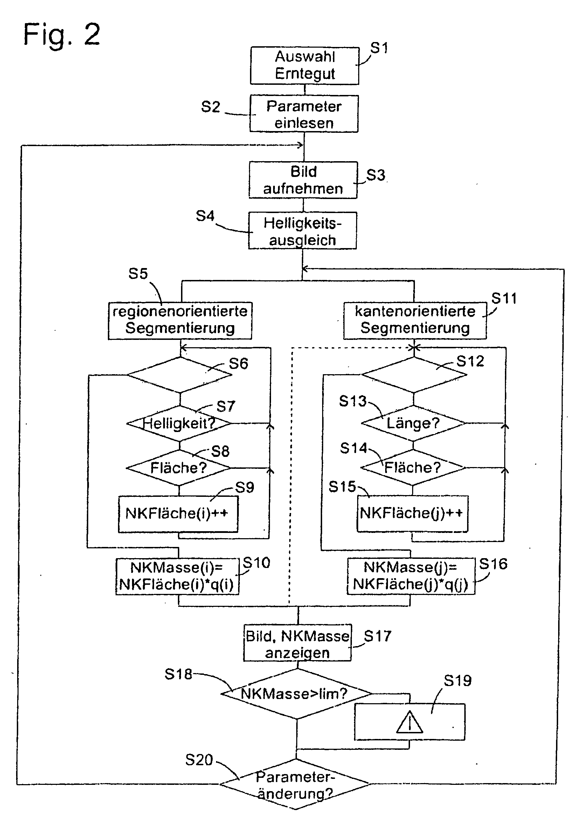

Fig. 2 zeigt ein Flussdiagramm eines von dem an die Kamera 20 gekoppelten Bordcomputer 30 ausgeführten Verfahrens.

Jeweils zu Beginn eines Erntevorgangs fordert der Bordcomputer 30 in Schritt S1 den Fahrer auf, die Art des Ernteguts anzugeben. Der Bordcomputer 30 verfügt über eine Datenbank, in der für die im Folgenden beschriebene Verarbeitung benötigte Parametersätze für diverse mögliche Erntegüter gespeichert sind. Diese Datenbank ist auf vom Hersteller des Mähdreschers mit geeigneten Parameterwerten für diverse Arten von Erntegut vorbelegt, kann aber vom Benutzer nach Bedarf editiert werden, um Anpassungen vorzunehmen. Einer bevorzugten Ausgestaltung zufolge umfassen die in Schritt S2 eingelesenen Parameter sowohl solche, die die im folgenden noch genauer beschriebene Auswertung der von der Kamera 20 gelieferten Bilder betreffen, als auch Einstellungen von Dresch- und Reinigungsstufe des Mähdreschers 1 wie etwa Trommelgeschwindigkeiten, Siebmaschenweiten, Gebläsedurchsätze, etc., die einen Einfluss auf Qualität und Reinheit des erzeugten Erntegutes haben und von dem Bordcomputer 30 mit Hilfe geeigneter Aktoren (nicht dargestellt) an Dresch- und Reinigungsstufen eingestellt werden können. Diese Parameterwerte sind im Allgemeinen so festgelegt, dass unter normalen Arbeitsbedingungen ein Erntegutstrom guter Qualität am Ort der Kamera 20 erhalten wird.

Einer einfacheren Ausgestaltung zufolge betreffen die in Schritt S2 eingelesenen Parameter lediglich die Auswertung von Bildern der Kamera 20 durch den Bordcomputer 30, und es obliegt dem Fahrer, Dreschund Reinigungsstufe passend zum jeweiligen Erntegut voreinzustellen.

Sobald ein stetiger Strom von Erntegut an der Kamera 20 vorbeizieht, veranlasst der Bordcomputer 30 diese in Schritt S3, ein Bild des Ernteguts aufzunehmen. Zur Vorbereitung der Bildverarbeitung im engeren Sinne wird zunächst in Schritt S4 an diesem Bild ein Helligkeitsausgleich vorgenommen, das heißt Bildbereiche, die über eine Ausdehnung hinweg, die deutlich größer ist als ein Partikel des gewünschten Ernteguts, heller oder dunkler als ein Mittelwert des aufgenommenen Bildes sind, werden rechnerisch verdunkelt bzw. aufgehellt, um zufällige Helligkeitsschwankungen auszugleichen, die sich zum Beispiel aus lokal unterschiedlichen Schichtdicken des Erntegut - und damit unterschiedlichen Entfernungen desselben von der Lichtquelle - oder lokalen Verschattungen ergeben.

Das so erhaltene Bild wird einer Segmentierung unterzogen. Diese kann regionenorientiert oder kantenorientiert sein; wenn genügend Rechenleistung des Bordcomputers 30 zur Verfügung steht, können auch verschiedene Segmentierungen an einem gleichen Bild durchgeführt werden. Es soll hier zunächst die regionenorientierte Segmentierung S5 betrachtet werden. In einer solchen Segmentierung wird das Bild in eine Mehrzahl von Regionen zerlegt, wobei jede Region durch einen Helligkeits- oder Farbwert gekennzeichnet ist, der sie von benachbarten Regionen unterscheidet und die Annahme rechtfertigt, dass in der Region genau ein Objekt dargestellt ist. Verfahren zur regionenorientierten Segmentierung sind unter den Schlagwörtern Region Growing, Regent Spliting, Pyramid Linking sowie Split and Merge bekannt und sollen hier nicht im einzelnen erläutert werden. Nach erfolgter Segmentierung wird in Schritt 6 eine Bildregion ausgewählt, und in Schritt S7 wird geprüft, ob sie eine hinreichend von einem Sollwert oder einem Mittelwert des Bildes abweichende Helligkeit aufweist, so dass das die untersuchte Region beispielsweise das Abbild der Bruchfläche eines Korns sein könnte. Ist dies nicht der Fall, wird in Schritt S6 eine neue Region ausgewählt. Weicht die Helligkeit ausreichend ab, so geht das Verfahren über zu Schritt S8, in welchem die Fläche der betreffenden Region, zum Beispiel durch Zählen der ihr angehörenden Bildpixel, ermittelt wird. Die so erhaltene Fläche wird in Schritt S9 zu einem vorab in Schritt S5 auf Null gesetzten Zählwert NKFläche(i) hinzu addiert, der ein Maß für den Anteil von Abbildern von Nicht-Kornmaterial eines i-ten Typs, hier der Bruchflächen von Bruchkörnern, an der Fläche des Bildes ist. Es können sich Wiederholungen der Schritte S7-S9 unter Zugrundelegung von Erkennungsparametern für Nichtkornmaterial anderer Typen anschließen.

Anschließend wird in Schritt S6 eine neue Region ausgewählt, und zwar so lange, bis alle Regionen verarbeitet sind. Dann geht das Verfahren über zu Schritt S10, in welchem der Zählwert NKFläche(i) mit einem für die Art des Ernteguts und den Typ des Nichtkornmaterials spezifischen Korrekturfaktor q(i) multipliziert wird, um einen Schätzwert für den Anteil NKMasse(i) der Bruchkörner an der Gesamtmasse des Erntematerials zu erhalten. Der Korrekturfaktor q(i) ist eine empirische Größe, die zu den in Schritt S2 eingelesenen Parametern gehört.

Eine weitere wichtige Klasse von unerwünschten Partikeln neben den Bruchkörnern ist Kurzstroh. Dessen Farbe beziehungsweise Helligkeit unterscheidet sich nicht wesentlich von derjenigen der Körner, so dass an sich eine kantenorientierte Segmentierung (S11) zu seiner Identifizierung bevorzugt ist. Um den Rechenaufwand des Bordcomputers 30 zu minimieren, kann aber auch, wie durch einen gestrichelten Pfeil im Flussdiagramm angedeutet, auf die kantenorientierte Segmentierung verzichtet werden, indem jeweils die Grenzen der in Schritt S5 identifizierten Regionen als Kanten aufgefasst werden.

Es wird nun jeweils in Schritt S12 eine der so erhaltenen Kanten ausgewählt und zunächst in Schritt S13 ihre Länge beurteilt. Wenn diese einen vorgegebenen Grenzwert unterschreitet, wird angenommen, dass die Kante das Bild eines Korns begrenzt, und das Verfahren kehrt zu Schritt S12 zurück, um eine neue Kante auszuwählen. Ist hingegen die Kante lang genug, dann wird in Schritt S14 die Fläche der von dieser Kante begrenzten Region oder auch deren Breite, das heißt ihre Ausdehnung quer zu der betrachteten Kante, beurteilt und bei ausreichender Größe wird angenommen, dass es sich um ein Stück Kurzstroh handelt. Dessen Fläche wird in Schritt S15 zu einem ebenfalls bei der Segmentierung auf Null gesetzten Zählwert NKFläche (j) hinzu addiert. Weitere Kanten der hinzuaddierten Fläche werden aus der Menge der noch zu verarbeitenden, in Schritt S12 wählbaren Kanten gestrichen, um eine Mehrfachzählung des gleichen Strohstücks auszuschließen.

Nachdem alle Kanten in dieser Weise verarbeitet worden sind, wird der Massenanteil NKMasse(j) des Kurzstrohs in Schritt S16 durch Multiplizieren des Flächenzählwerts NKFläche (j) mit einem entsprechenden Korrekturfaktor q(j) berechnet.

In Schritt S17 zeigt der Bordcomputer 30 das in Schritt S3 erhaltene Bild, in dem alle als Abbilder von Nichtkornbestandteilen identifizierten Regionen des Bildes hervorgehoben sind, sowie die berechneten Massenanteile NKMasse (i) des Bruchkorns und NKMasse (j) des Kurzstrohs auf einem Bildschirm der Steuer-/Monitoreinrichtung 29 an. Der Fahrer erhält so Aufschluss über die aktuelle Qualität des Erntegutes, und gleichzeitig kann er sich der Qualität der Beurteilung vergewissern, indem er überprüft, ob alle gekennzeichneten Regionen des Bildes tatsächlich Nichtkornbestandteile enthalten beziehungsweise ob alle Nichtkornbestandteile, die er in dem Bild erkennt, auch von dem Bordcomputer 30 erkannt worden sind.

In Schritt S18 überprüft der Bordcomputer 30, ob der Anteil eines dieser überwachten Nichtkornbestandteile einen vorgegebenen Grenzwert überschreitet. Wenn ja, wird in Schritt S19 eine Gegenmaßnahme getroffen. Diese kann darin bestehen, dass der Bordcomputer 30 selbst einen Betriebsparameter der Dresch- und/oder Reinigungsstufe auswählt, der einen Einfluss auf den betreffenden Nichtkornmaterialanteil hat, und diesen verstellt, um den Nichtkornmaterialanteil zu reduzieren. Alternativ kann sich die Gegenmaßnahme des Schritts S19 auch darauf beschränken, dem Fahrer eine Warnung zukommen zu lassen, um diesen zu veranlassen, die erforderlichen Parameteranpassungen selbst vorzunehmen.

Falls der Fahrer anhand des in Schritt S17 angezeigten Bildes eine signifikante Rate von Erkennungsfehlern feststellt, wird er zweckmäßigerweise über die Steuer-/Monitoreinrichtung 29 den einen oder anderen der in den Schritten S7, S8, S13, S14 untersuchten Parametergrenzwerte modifizieren. Falls dies geschieht, kehrt das Verfahren von Schritt S20 zur Segmentierung des Schritts S5 oder S11 zurück und wiederholt diese und die Identifizierung der Nichtkornpartikel auf der Grundlage desselben Bildes wie zuvor. Wenn das verarbeitete Bild erneut in Schritt S17 angezeigt wird, kann der Fahrer unmittelbar sehen, ob die Erkennung der Nichtkornpartikel besser oder schlechter geworden ist, und die vorgenommene Parameteränderung dementsprechend beibehalten oder wieder verwerfen.

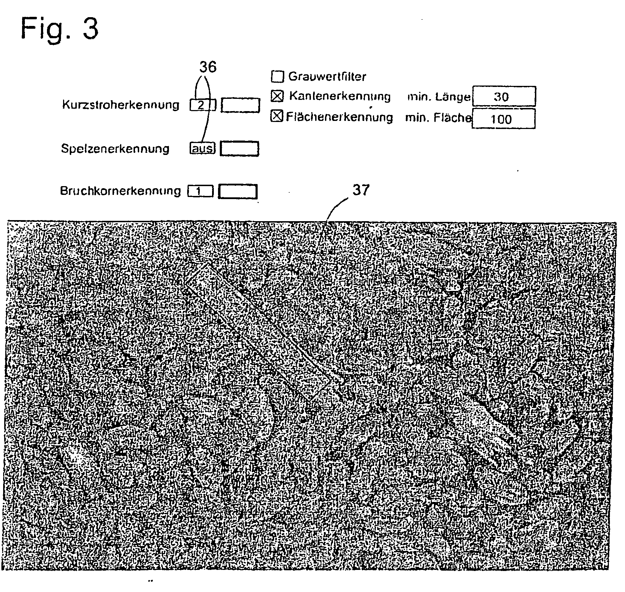

Fig. 3 zeigt ein Beispiel des Anzeigebildes auf dem Bildschirm der Steuer- und Monitoreinrichtung 29. Ein Textbereich im oberen Teil des Bildschirms zeigt Typen von erkennbarem Nichtkornmaterial: Bruchkorn, Spelzen und Kurzstroh. Den Typenbezeichnungen benachbarte Dialogfelder 36 können vom Fahrer mit Werten 0, 1, 2 ausgefüllt werden, die jeweils den Betriebsmodi ausgeschaltete Erkennung, eingeschaltete Erkennung mit gespeicherten Erkennungsparametern bzw. Ändern der Erkennungsparameter entsprechen. Für den Nichtkornmaterialtyp Kurzstroh ist der Modus Ändern der Erkennungsparameter aktiviert, und die veränderbaren Parameter Länge und Fläche sowie ihre aktuellen Werte sind angezeigt.

Der untere Bereich des Bildschirms zeigt ein von der Kamera 20 aufgenommenes Bild. Ein in dem Bild erkanntes Stück Stroh ist durch einen eingeblendeten Rahmen 37 hervorgehoben.

### Bezugszeichen

- 1: Mähdrescher
- 2: Getreideschneidwerk
- 3: Einzug
- 4: Einzugskette
- 5: Vorbeschleunigertrommel
- 6: Dreschtrommel
- 7: Wendetrommel
- 8: Dreschkorb
- 9: Schüttler
- 10: Obersieb
- 11: Untersieb
- 12: Überkehrelevator
- 13: Kornelevator
- 20: Kamera
- 21: Schüttboden
- 24: Reinigungsgebläse
- 27: Vorbereitungsboden
- 28: Rücklaufboden
- 29: Steuer- und Monitoreinrichtung
- 30: Bordcomputer
- 33: Korntank
- 34: Fallstufe
- 35: Fahrerkabine
- 36: Dialogfeld
- 37: Rahmen

## Patentansprüche

1. Verfahren zur Einschätzung des Anteils an unerwünschten Partikeln in Erntegut mit den Schritten:
a) Aufnehmen eines Bildes des Ernteguts (S3);
b) Identifizieren von Abbildern wenigstens eines Typs von unerwünschten Partikeln im aufgenommenen Bild (S5-S8; S11-S14);
c) Messen der von dem Abbild jedes erfassten Partikels in dem Bild belegten Fläche (S8; S14);
d) Festlegen des Anteils der unerwünschten Partikel proportional zu der Fläche der erfassten Abbilder (S9; S15)
**dadurch gekennzeichnet,**
**dass** das in Schritt a) aufgenommene Erntegut ein Erntegutstrom in einer Erntemaschine ist,
**dass** die Identifikation des Schritts b) anhand wenigstens eines anpassbaren Parameters erfolgt, mit dem zusätzlichen Schritt
f) Akzeptieren eines durch einen Benutzer gewählten Werts des Parameters (S20).

2. Verfahren nach Anspruch Schritt 1, **dadurch gekennzeichnet, dass** in Schritt d) die erfasste Fläche mit einem Korrekturfaktor multipliziert wird (S10; S16), um den Fremdkörperanteil ausgedrückt als Verhältnis der Masse der Fremdkörper zur Masse des Ernteguts zu erhalten.

3. Verfahren nach einem der vorhergehenden Ansprüche, mit dem weiteren Schritt:
e) Kennzeichnen von in Schritt c) erfassten Abbildern unerwünschter Partikel in dem Bild und Anzeigen (S17) des so erhaltenen Bildes.

4. Verfahren nach Anspruch 3, **dadurch gekennzeichnet, dass** nach jeder Durchführung des Schritts f) (S20) die Schritte c) (S8; S14) und e) (S17) am gleichen aufgenommenen Bild wiederholt werden.

5. Verfahren nach einem der vorhergehenden Ansprüche, mit dem weiteren Schritt:
g) Erzeugen eines Warnsignals (S19), wenn der festgelegte Anteil einen Grenzwert überschreitet.

6. Verfahren nach einem der vorhergehenden Ansprüche, **dadurch gekennzeichnet, dass** Schritt e) jeweils für mehrere aufgenommene Bilder gemeinsam durchgeführt wird.

7. Verfahren nach einem der vorhergehenden Ansprüche, **dadurch gekennzeichnet, dass** eine Klasse der unerwünschten Partikel Bruchkörner sind und dass in Schritt b) das Abbild eines Bruchkorns identifiziert wird, wenn die Ausdehnung einer hellen Zone in dem Bild in einem vorgegebenen Bereich liegt.

8. Verfahren nach einem der vorhergehenden Ansprüche, **dadurch gekennzeichnet, dass** das Bild regionenorientiert segmentiert wird (S5) und anhand der Helligkeit jeder einzelnen erhaltenen Region entschieden wird (S7), ob sie das Abbild eines unerwünschten Partikels ist oder nicht.

9. Verfahren nach einem der vorhergehenden Ansprüche, **dadurch gekennzeichnet, dass** eine Klasse der unerwünschten Partikel Kurzstroh ist und dass in Schritt b) ein Stück Kurzstroh identifiziert wird (S14, S15), wenn die Ausdehnung einer Zone in dem Bild in einer Längsrichtung in einem ersten Bereich und in einer Querrichtung in einem anderen, zweiten Bereich liegt.

10. Verfahren nach einem der vorhergehenden Ansprüche, **dadurch gekennzeichnet, dass** das Bild kantenorientiert segmentiert wird (S11) und anhand der Länge einer erhaltenen Kante entschieden wird (S13), ob sie das Abbild eines unerwünschten Partikels ist oder nicht.

11. Computerprogramm mit Programmcode-Mitteln, um die Schritte eines Verfahrens nach einem der vorhergehenden Ansprüche auf einem mit einer Kamera gekoppelten Computer auszuführen.

12. Computerprogrammprodukt mit Programmcode-Mitteln, die auf einem computerlesbaren Datenträger gespeichert sind, um das Verfahren nach einem der Ansprüche 1 bis 10 auf einem mit einer Kamera gekoppelten Computer auszuführen.

13. Computer (30), gekoppelt an eine Kamera (20) und **dadurch gekennzeichnet, dass** er programmiert ist, um das Verfahren nach einem der Ansprüche 1 bis 10 auszuführen.

14. Computer nach Anspruch 13, **dadurch gekennzeichnet, dass** er in einer Erntemaschine eingebaut ist und die Kamera (20) angeordnet ist, um Bilder eines Erntegutstroms in der Erntemaschine zu erzeugen.

15. Computer nach Anspruch 13 oder 14, **dadurch gekennzeichnet, dass** er ferner eingerichtet ist, Parameter der Verarbeitung des Ernteguts in der Erntemaschine anhand des festgelegten Anteils der unerwünschten Partikel zu steuern.

## Claims

1. A method of estimating the proportion of unwanted particles in crop material comprising the steps:
a) recording an image of the crop material (S3);
b) identifying images of at least one type of unwanted particles in the recorded image (S5-S8; S11-S14);
c) measuring the area (S8; S14) occupied in the image by the image of each detected particle; and
d) determining the proportion of the unwanted particles proportionally to the area of the detected particle images (S9; S15),
**characterised in that**
the crop material recorded in step a) is a crop material flow in a harvester,
identification in step b) is effected on the basis of at least one adaptable parameter, with the additional step:
f) accepting a value selected by a user of the parameter (S20).

2. A method according to claim 1 **characterised in that** in step d) the detected area is multiplied by a correction factor (S10; S16) in order to obtain the foreign body proportion expressed as the ratio of the mass of the foreign bodies to the mass of the crop material.

3. A method according to one of the preceding claims comprising the further step:
e) characterising images of unwanted particles detected in step c) in the crop material image and displaying (S17) the image acquired in that way.

4. A method according to claim 3 **characterised in that** after each performance of step f) (S20) steps c) (S8; S14) and e) (S17) are repeated on the same recorded image.

5. A method according to one of the preceding claims comprising the further step:
g) producing a warning signal (S19) if the detected proportion exceeds a limit value.

6. A method according to one of the preceding claims **characterised in that** step e) is jointly performed respectively for a plurality of recorded images.

7. A method according to one of the preceding claims **characterised in that** a class of the unwanted particles are broken grains and in step b) the image of a broken grain is identified if the extent of a light zone in the recorded image is in a predetermined region.

8. A method according to one of the preceding claims **characterised in that** the recorded image is segmented (S5) in region-oriented relationship and it is decided (S7) whether it is or is not the image of an unwanted particle on the basis of the lightness of each individual acquired region.

9. A method according to one of the preceding claims **characterised in that** a class of the unwanted particles is short straw and a piece of short straw is identified (S14, S15) in step b) if the extent of a zone in the recorded image is in a longitudinal direction in a first region and in a transverse direction in another second region.

10. A method according to one of the preceding claims **characterised in that** the image is segmented in edge-oriented relationship (S11) and it is decided (S13) whether it is or is not the image of an unwanted particle on the basis of the length of an acquired edge.

11. A computer program with program code means for performing the steps of a method according to one of the preceding claims on a computer coupled to a camera.

12. A computer program product with program code means stored on a computer-readable data carrier to perform the method according to one of claims 1 to 10 on a computer coupled to a camera.

13. A computer (30) coupled to a camera (20) and **characterised in that** it is programmed to perform the method according to one of claims 1 to 10.

14. A computer according to claim 13 **characterised in that** it is installed in a harvester and the camera (20) is arranged to produce images of a crop material flow in the harvester.

15. A computer according to claim 13 or claim 14 **characterised in that** it is further adapted to control parameters of processing of the crop material in the harvester on the basis of the detected proportion of the unwanted particles.

## Revendications

1. Procédé d'estimation de la part de particules indésirables dans un produit de récolte, comprenant les étapes consistant à :
a) capturer une image du produit de récolte (S3) ;
b) identifier des représentations d'au moins un type de particules indésirables dans l'image capturée (S5-S8 ; S11-S14) ;
c) mesurer la surface (S8 ; S14) occupée dans l'image par la représentation de chaque particule détectée ;
d) déterminer la part de particules indésirables de façon proportionnelle à la surface des représentations détectées (S9 ; S15),
**caractérisé en ce que**
le produit de récolte capturé à l'étape a) est un flux de produit de récolte dans une machine de récolte,
l'identification de l'étape b) est effectuée à l'aide d'au moins un paramètre adaptable, avec l'étape supplémentaire consistant à
f) accepter une valeur du paramètre (S20) choisie par un utilisateur.

2. Procédé selon la revendication 1, **caractérisé en ce qu'**à l'étape d), la surface détectée est multipliée par un facteur de correction (S10 ; S16) pour obtenir la part de corps étrangers exprimée comme rapport entre la masse des corps étrangers et la masse du produit de récolte.

3. Procédé selon l'une des revendications précédentes, avec l'étape supplémentaire consistant à :
e) caractériser les représentations de particules indésirables détectées à l'étape c) dans l'image et afficher (S17) l'image ainsi obtenue.

4. Procédé selon la revendication 3, **caractérisé en ce qu'**après chaque exécution de l'étape f) (S20) les étapes c) (S8 ; S14) et e) (S17) sont répétées sur la même image capturée.

5. Procédé selon l'une des revendications précédentes, avec l'étape supplémentaire consistant à :
g) générer un signal d'avertissement (S19) lorsque la part déterminée dépasse une valeur limite.

6. Procédé selon l'une des revendications précédentes, **caractérisé en ce que** l'étape e) est chaque fois exécutée conjointement pour plusieurs images capturées.

7. Procédé selon l'une des revendications précédentes, **caractérisé en ce qu'**une classe des particules indésirables est formée de grains cassés et **en ce qu'**à l'étape b), la représentation d'un grain cassé est identifiée lorsque l'extension d'une zone claire dans l'image se situe dans une plage prédéfinie.

8. Procédé selon l'une des revendications précédentes, **caractérisé en ce que** l'image est segmentée en régions (S5) et **en ce qu'**il est décidé, à partir de la clarté de chaque région obtenue (S7), si elle est ou non la représentation d'une particule indésirable.

9. Procédé selon l'une des revendications précédentes, **caractérisé en ce qu'**une classe des particules indésirables est formée de paille courte et **en ce qu'**à l'étape b), un morceau de paille courte est identifié (S14, S15) lorsque l'extension d'une zone dans l'image se situe dans une première plage dans une direction longitudinale et dans une autre ou deuxième plage dans une direction transversale.

10. Procédé selon l'une des revendications précédentes, **caractérisé en ce que** l'image est segmentée en arêtes (S11) et **en ce qu'**il est décidé, à partir de la longueur d'une arête obtenue (S13), si elle est ou non la représentation d'une particule indésirable.

11. Programme d'ordinateur avec des moyens de codage de programme pour exécuter les étapes d'un procédé selon l'une des revendications précédentes sur un ordinateur couplé à une caméra.

12. Produit de programme d'ordinateur avec des moyens de codage de programme qui sont stockés sur un support de données lisibles par ordinateur pour exécuter le procédé selon l'une des revendications 1 à 10 sur un ordinateur couplé à une caméra.

13. Ordinateur (30), couplé à une caméra (20) et **caractérisé en ce qu'**il est programmé pour exécuter le procédé selon l'une des revendications 1 à 10.

14. Ordinateur selon la revendication 13, **caractérisé en ce qu'**il est monté dans une machine de récolte et **en ce que** la caméra (20) est disposée de manière à produire des images d'un flux de produit de récolte dans la machine de récolte.

15. Ordinateur selon la revendication 13 ou 14, **caractérisé en ce que**, en outre, il est conçu pour commander des paramètres du traitement du produit de récolte dans la machine de récolte à partir de la part déterminée de particules indésirables.
